Europäisches Patentamt

(19) European Patent Office

Office européen des brevets

(11) Veröffentlichungsnummer: **0 082 971**
**B1**

(12) **EUROPÄISCHE PATENTSCHRIFT**

(45) Veröffentlichungstag der Patentschrift:
20.03.85

(21) Anmeldenummer: **82111058.2**

(22) Anmeldetag: **30.11.82**

(51) Int. Cl.⁴: **C 09 K 17/00**

(54) **Gelbildendes Gemisch auf Alkalisilicat-Basis.**

(30) Priorität: **28.12.81 DE 3151680**

(43) Veröffentlichungstag der Anmeldung:
**06.07.83 Patentblatt 83/27**

(45) Bekanntmachung des Hinweises auf die Patenterteilung:
**20.03.85 Patentblatt 85/12**

(84) Benannte Vertragsstaaten:
**AT BE CH DE FR GB IT LI LU NL SE**

(56) Entgegenhaltungen:
**GB - A - 766 419**

(73) Patentinhaber: **DYNAMIT NOBEL
AKTIENGESELLSCHAFT, Postfach 1209,
D-5210 Troisdorf, Bez. Köln (DE)**

(72) Erfinder: **Burkhardt, Rudolf, Dr., Alte Strasse 27,
D-5210 Troisdorf (DE)**
Erfinder: **Hass, Hansjürgen, Dr., Telegrafstrasse 27,
D-5210 Troisdorf (DE)**
Erfinder: **Hanisch, Horst, Dr., Fröbelweg 19,
D-5202 Hennef/Sieg. (DE)**
Erfinder: **Vogel, Günter, Zum Scherbusch 45,
D-5202 Hennef 41 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Vorliegende Erfindung betrifft flüssige Gemische aus Alkalimetallsilicaten, Wasser und einem Geliermittel, die in vorausbestimmbarer Zeit zu kieselsäurehaltigen Gelen erstarren. Wichtigstes Anwendungsgebiet ist die Bodenstabilisierung in der Bautechnik.

Die getrennte oder gemeinsame Anwendung von wässerigen Alkalisilicatlösungen und Geliermitteln zur Bodenstabilisierung ist seit langem bekannt. Dabei werden überwiegend solche Geliermittel verwendet, die sich der Silicatlösung ohne sofortige Gelbildung untermischen lassen und die erst nach einer für die Herstellung und Anwendung der Mischung ausreichenden Zeit zur Gelbildung führen. Durch Injektion dieser flüssigen, im Boden erstarrenden Gemische in das zu stabilisierende Erdreich können wasserdurchlässige Böden abgedichtet und verfestigt werden.

Eigenschaften und Eignung der Gele sind von der Art und Menge sowohl des Alkalisilicats als auch der Geliermittel abhängig.

Voraussetzung für eine wirksame Bodenabdichtung ist eine möglichst geringe und langsame Synärese der Gele. Als Synärese wird die Volumenkontraktion der Gele unter Abscheidung einer wässerigen Phase (Synäresewasser) verstanden.

Die als „Monosolverfahren" bekannte Anwendung von Wasserglaslösungen mit Natriumaluminat als Geliermittel erfüllt diese Voraussetzungen im Bereich niedriger Wasserglaskonzentrationen. Diese Gele besitzen zwar eine gute wasserabdichtende Wirkung, aber praktisch keine eigene Festigkeit. Eine wesentliche Verbesserung der Gelfestigkeit durch Erhöhen der Wasserglaskonzentration und damit des $SiO_2$-Gehalts der Gele ist nicht möglich, da bei der Herstellung von Gemischen mit einem $SiO_2$-Gehalt von mehr als ca. 110 g/l die Gefahr einer sofortigen Gel- oder Niederschlagsbildung bei Zugabe des Natriumaluminats besteht. Daher können auch nur Gele mit einem maximalen $SiO_2$-Gehalt von ca. 120 g/l im Boden erzeugt werden, deren verfestigende Wirkung sehr gering ist.

Für Bodenverfestigungen mit Gemischen auf Alkalisilicatbasis werden andere, häufig organische Geliermittel verwendet. Die organischen Mittel, hauptsächlich Erster sowie einige Amide und Aldehyde, können auch hochprozentigen Wasserglaslösungen ohne Gefahr einer sofortigen Reaktion zugemischt werden.

So ist er z.B. aus den FR-PS Nrn. 1164835 und 1502645 bekannt, Alkylester niederer Fettsäuren im Gemisch mit Alkalisilicatlösungen zur Bodenstabilisierung zu verwenden. Gemäss den DE-PA Nrn. 1567776 und 2242713 sind auch die Alkylester von Dicarbonsäuren, z.B. von Bernstein-, Glutar- und Adipinsäure, als Geliermittel geeignet. Ein Nachteil der meisten Alkylester, einschliesslich Ethylacetat, ist deren geringe Löslichkeit in Wasserglaslösungen, die zur Entmischung und Abscheidung nicht umgesetzter Ester führen kann. Als Folgen davon können ungleichmässige Gelbildung und Verunreinigung des Grundwassers eintreten.

Zur Vermeidung dieser Nachteile werden verschiedene wasserlösliche Ester als Geliermittel empfohlen: So werden in der FR-PS Nr. 2175481 Glycerinacetatgemische und der GB-PS Nr. 1109140 cyclische Ester vom Lacton- oder Alkylencarbonattyp als geeignete Geliermittel für Alkalisilicatlösungen genannt.

Die hohe Festigkeit und damit auch die verfestigende Wirkung der mit Hilfe organischer Geliermittel erzeugten Gele beruht hauptsächlich auf ihrem hohen $SiO_2$-Gehalt. Dieser ist nicht nur auf die höheren Silicatkonzentrationen dieser Gemische, sondern auch auf die starke Synärese der Gele zurückzuführen. Mit der Schrumpfung der Gele, die bei mittleren Silicatkonzentrationen (ca. 45 bis 70 Vol.-% an technischer Wasserglaslösung einer Dichte von etwa 1,25 bis etwa 1,45 entsprechend 30 bis 45° Bé) etwa 50 bis 70% betragen kann, steigt ihr $SiO_2$-Gehalt um einen ähnlichen Prozentsatz an. Während die Festigkeit der Gele mit der Synärese zunimmt, geht der Abdichtungseffekt zurück, da das Porenvolumen des behandelten Bodens nur noch teilweise mit Gel angefüllt ist. Mit zunehmender Wasserdurchlässigkeit oder bei plötzlichem Wassereinbruch können mit dem Synäresewasser innerhalb kurzer Zeit erhebliche Mengen an organischen Hydrolyseprodukten und ein unveränderer Rest des Geliermittels in das Grundwasser gelangen und zu einer unzulässig hohen Verunreinigung führen.

In der Praxis ist es oft erforderlich, einen Baugrund sowohl abzudichten als auch zu verfestigen. Die Bildung eines Gels, das beide Forderungen erfüllt, setzt eine Zurückdrängung der zur Undichtigkeit führenden Synärese voraus. Möglichkeiten dafür sind:

1. Erhöhung des Silicatgehaltes des gelbildenden Gemisches z.B. auf mehr als 70 Vol.-% technischer Wasserglaslösung; dadurch wird die Abscheidung von Synäresewasser zurückgedrängt.

2. Bindung oder Einschluss des Synäresewassers durch Zusatz von gerüstbildenden Mitteln, z.B. Zementsuspensionen. Als Geliermittel wurden bisher in beiden Fällen die oben genannten organischen Substanzen, im zweiten Fall besonders Formamid, eingesetzt; die Verwendung von Formamid ist jedoch wegen dessen toxischer (teratogener) Wirkung nicht unbedenklich. Für die Behandlung feinkörniger Böden kann jedoch keine der beiden Möglichkeiten genutzt werden, da das Eindringvermögen der Gemische stark herabgesetzt ist, im ersten Fall durch die hohe Viskosität, im zweiten durch den Feststoffgehalt. In der Praxis werden deshalb solche feinkörnigen Böden zunächst mit einem abdichtenden Gemisch behandelt und anschliessend wird ein verfestigendes Gemisch injiziert. Eine solche Verfahrensweise ist ausserordentlich zeitintensiv und verursacht praktisch einen doppelt so grossen Aufwand wie eine einstufige Arbeitsweise.

Der vorliegenden Erfindung liegt deshalb die Aufgabe zugrunde, für die Bodenstabilisierung geeignete Gemische auf Alkalisilicatbasis zu entwickeln, die sowohl eine sichere Abdichtung gewährleisten, als auch zusätzlich verfestigend wirken und weiterhin zur Behandlung feinkörniger Böden geeignet sind.

In Erfüllung dieser Aufgabe wurde nun ein gelbildendes Gemisch aus Alkalimetallsilicat, Wasser und Geliermittel gefunden, das als Geliermittel ein Trialkoxysilan der Formel R-Si(OR')$_3$ enthält, in der R einen aliphatischen Rest mit 1 bis 6 C-Atomen und die Reste R', die gleich oder verschieden sein können, Alkylreste mit 1 bis 4 C-Atomen bedeuten. Bevorzugte Trialkoxysilane sind n-Propyl-, Isopropyl- und Isobutyltrimethoxysilan bzw. -triethoxysilan. Die Alkoxygruppen dieser Silane können auch teilweise in hydrolysierter Form als OH-Gruppen vorliegen.

Die Menge des erfindungsgemäss als Geliermittel einzusetzenden Silans ist vom Molgewicht des Silans, vom Wasserglasgehalt und von der gewünschten Gelzeit des Gemischs abhängig. Sie beträgt für Gemische mit 10 bis 90 vol.-%iger Wasserglaslösung von 30 bis 43° Bé ($d_4^{20}$=1,25 bis 1,4) und Gelzeiten von 30 bis 300 min 20 bis 140 g/l Gemisch entsprechend einem Molverhältnis Silan: SiO$_2$ von (0,05 bis 0,28):1.

Durch Änderung des Geliermittel/Alkalisilicat-Mengenverhältnisses lassen sich die Gelzeiten der erfindungsgemässen Gemische in weiten Grenzen variieren. Die Gelzeiten wie auch die Gelfestigkeiten lassen sich ausserdem durch zusätzliche dem Gemisch aus Alkalimetallsilicat, Wasser und Trialkoxysilan beizufügende Mittel einstellen. Solche zusätzlichen Mittel zur Gelzeiteinstellung sind z.B. Hydroxide und alkalisch reagierende Salze der Alkalimetalle und des Ammoniums, von denen besonders Natriumverbindungen wie NaOH, Na$_2$CO$_3$, NaOOCCH$_3$ oder Na$_3$PO$_4$ zur Gelzeitverkürzung geeignet sind. Als zusätzliche Mittel eignen sich aber auch andere, an sich bekannte Geliermittel für wässerige Alkalisilicatlösungen, wie z.B. die Alkylencarbonate (z.B. Ethylen- oder 1,2-Propylencabonat), die ausser einer Verkürzung der Gelzeit auch eine schnellere Zunahme der Gelfestigkeit bewirken. Diese Substanzen können dem Alkalisilicat/Wasser/Silan-Gemisch in Mengen bis zu etwa 3 Gew.-%, bezogen auf dieses Gemisch, hinzugefügt werden.

Mit Hilfe der zusätzlichen Mittel können die Eigenschaften der erfindungsgemässen Gemische kurzfristig an unvorhergesehene Abweichungen lokaler Bodenverhältnisse angepasst werden. Diese Ausnahmefälle erfordern hauptsächlich Gemische mit kurzen Gelzeiten und schneller abdichtender oder verfestigender Wirkung. In allen anderen Fällen sind zusätzliche Mittel weder erforderlich noch vorteilhaft.

Unter Alkalisilicaten sollen erfindungsgemäss die als Wassergläser bekannten Kalium- und besonders Natriumsilicate verstanden werden. Aufgrund ihrer Herstellungsweise fallen sie als wässerige Lösungen mit unterschiedlichen Gehalten an Alkalioxid und SiO$_2$ an. Sie werden deshalb als solche wässerigen Lösungen eingesetzt, wobei bevorzugt konzentrierte Lösungen mit einer Dichte $d_4^{20}$ von etwa 1,25 bis 1,40 (entsprechend 30 bis 43° Bé) verwendet werden. Die Lösungen werden, je nach Anwendungszweck, mit Wasser auf den gewünschten Konzentrationsgrad verdünnt.

Im allgemeinen muss bei der Zusammensetzung der zur Bodenstabilisierung verwendeten Gemische aus Alkalisilicatlösung und Geliermittel ausser der Bodenbeschaffenheit und der beabsichtigten Wirkung auch die Verträglichkeit der Komponenten untereinander und die zu erzielende Gelzeit berücksichtigt werden. Die erfindungsgemässen Gemische lassen sich ohne Gefahr einer sofortigen Gelbildung oder Fällung auch noch unter Verwendung unverdünnter technischer Wasserglaslösungen einer Dichte von etwa 1,25 bis etwa 1,40 (ca. 30 bis 43° Bé) herstellen. Im gesamten Bereich üblicher Wasserglaskonzentrationen können durch Variation der Trialkoxysilanmengen Gelzeiten zwischen 30 und 300 min eingestellt werden. In allen Fällen entstehen primär sehr dichte Gele, die sich in ihrem weiteren Verhalten deutlich von den aus bekannten Alkalisilicat-Geliermittel-Gemischen erhaltenen Gelen unterscheiden. Die Synärese setzt später ein und verläuft viel langsamer als bei Gelen aus Gemischen mit bekannten organischen Geliermitteln. Bei den bevorzugt einzusetzenden Silicat/Trialkoxysilan-Verhältnissen von 0,04 bis 0,11 mol Silan/100 cm³ Wasserglaslösung einer Dichte $d_4^{20}$ von etwa 1,38 (entsprechend 38 bs 40° Bé) beträgt sie nach vier Wochen weniger als 10% und gewährleistet über diesen für viele Bauvorhaben ausreichenden Zeitraum einen hohen Abdichtungseffekt. Die langsam zunehmende Gelfestigkeit verhindert die an anderen Abdichtungsgelen bei Kontakt mit Wasser beobachteten Erweichungs- und Auflösungserscheinungen und führt zu einer erwünschten Zunahme der verfestigenden Wirkung.

Die praktische Herstellung und Anwendung der erfindungsgemässen Gemische kann mit den für die Bodenbehandlungstechnik üblichen Geräten erfolgen. Die Mischung der Komponenten ist auf 2 Wegen möglich: 1. Man mischt Wasserglaslösung und Wasser im gewünschten Verhältnis, setzt die benötigte Menge an Trialkoxysilan zu und rührt bis zu dessen Lösung, wozu etwa 30 bis 45 min erforderlich sind.

2. Man löst die benötigte Trialkoxysilanmenge in der etwa gleichen Menge Wasser, das mit sehr wenig Mineralsäure auf einen pH-Wert von 3,5 bis 4 gebracht wurde und setzt diese Lösung dem Gemisch aus Wasserglas und restlichem Wasser zu. Die erste Methode ist für praktisch alle Konzentrationsverhältnisse brauchbar, die zweite etwas schnellere Methode für Gemische mit niedrigem Wassergehalt (<70 Vol.-%).

*Beispiel 1*

Technische Wasserglaslösung ($d_4^{20}$ ca. 1,35) und Wasser wurden entsprechend den in der Tabelle I angegebenen Volumenanteilen vermischt, die angegebene Menge n-Propyltrimethoxysilan zugesetzt und das Gemisch 45 min gerührt. Zur Charakterisierung wurde die Gelzeit der Gemische und die Synärese der Gele bestimmt.

Gelzeit = Zeit von der Zugabe des Silans bis zum Erstarren des Gemischs. Der Zeitpunkt des Erstarrens war erreicht, wenn ein quer durch die Oberfläche des Gemischs gezogener Glasstab eine nach 5 s noch sichtbare Spur hinterliess (ca. 100 mPa·s). Zur Kontrolle wurde die Kippzeit bestimmt, nach der eine Probe des Gemisches aus einem um mehr als 90° geneigten Reagenzglas nicht mehr ausfloss. (Die hier nicht angegebenen Kippzeiten lagen um durchschnittlich 1 min unter den Gelzeiten.)

Synärese = Volumenkontraktion des Gels, bestimmt durch Abgiessen und Messen des Synäresewassers, dessen Volumen in Prozent vom Gesamtvolumen angegeben wurde.

*Tabelle I*

| Wasserglas (ml) | Wasser (ml) | Silan (g) | Gelzeit (min) | Synärese (%) nach x Tagen | | | | |
|---|---|---|---|---|---|---|---|---|
| | | | | 1 | 3 | 7 | 14 | 28 |
| 20 | 80 | 4,5 | 80 | 0 | 1 | 3 | 6 | 10 |
| 30 | 70 | 5,5 | 99 | 0 | 0 | 0,5 | 2 | 5 |
| 50 | 50 | 6,0 | 100 | 0 | 0 | <0,5 | 2 | 5 |
| 60 | 40 | 6,5 | 104 | 0 | 0 | <0,5 | 0,5 | 1 |
| 70 | 30 | 7,5 | 98 | 0 | 0 | <0,5 | 3 | 6 |
| 80 | 20 | 8,0 | 85 | 0 | 0 | 0 | <0,5 | 0,5 |

*Beispiele 2*

60 ml Wasserglaslösung ($d_4^{20}$ ca. 1,35) 40 ml Wasser und 5,9 g Isobutyltrimethoxysilan wurden unter Zusatz von 0,5 ml Emulgator (40%ige Na-Alkylarylsulfonatlösung) 15 min gerührt. Die Gelzeit des erhaltenen Gemischs betrug 33 min, gemessen ab der Silanzugabe. Das steife Gel hatte praktisch keine Synärese (nach 28 d <1%).

*Beispiel 3*

50 ml Wasser wurden mit verdünnter Salzsäure auf einen pH-Wert von 3,6 angesäuert und mit 50 g n-Propyltrimethoxysilan gerührt, wobei nach 7 min eine homogene Lösung erhalten wurde.

a) 10 g der 50%igen Silanlösung wurden in eine Mischung aus 30 ml Wasserglaslösung ($d_4^{20}$=1,26) und 60 ml Wasser eingerührt. Das Gemisch erstarrte nach einer Gelzeit von 95 min. Die Synärese des steifen Gels betrug nach 24 d 1,5%.

b) 15 g der 50%igen Silanlösung wurden innerhalb von 3 min unter kräftigem Rühren in eine Mischung aus 60 ml Wasserglaslösung ($d_4^{20}$=1,26) und 30 ml Wasser eingetropft. Das Rühren wurde noch 10 min fortgesetzt, wobei die anfängliche Trübung weitgehend verschwand. Nach einer Gelzeit von 92 min entstand ein steifes, opakes Gel mit sehr geringer Synärese (0,5% nach 24 d).

*Beispiel 4*

Aus je 60 ml Wasserglaslösung ($d_4^{20}$ ca. 1,35) und 40 ml Wasser wurden durch Verwendung unterschiedlicher Mengen an n-Propyltrimethoxysilan drei Gemische mit unterschiedlichen Gelzeiten hergestellt. Die Ergebnisse gehen aus Tabelle II hervor. Die Herstellung der Gemische wurde unter Zusatz von Natriumhydroxid zur Verkürzung der Gelzeit wiederholt. Das Natriumhydroxid wurde in einer dem Silan äquimolaren Menge im Wasseranteil der Gemische gelöst.

*Tabelle II*

| Versuch | Silan (g) | NaOH (g) | Gelzeit (min) | Synärese der Gele (%) nach | |
|---|---|---|---|---|---|
| | | | | 3 d | 14 d |
| a | 4,5 | — | 417 | 0 | 1,0 |
| | | 1,12 | 119 | <0,5 | 4,5 |
| b | 5,5 | — | 218 | 0 | 0,5 |
| | | 1,37 | 62 | <0,5 | 6,5 |
| c | 6,5 | — | 104 | 0 | 0,5 |
| | | 1,62 | 43 | <0,5 | 8,5 |

*Beispiel 5*

Dem im Beispiel 4b genannten Gemisch aus 60 ml Wasserglaslösung ($d_4^{20}$ ca. 1,35), 40 ml Wasser und 5,5 g n-Propyltrimethoxysilan (Gelzeit 218 min) wurde nach 30minütigem Rühren 2,5 g 1,2-Propylencarbonat zugesetzt; nach 18 min erstarrte das Gemisch zu einem festen Gel mit höherer Synärese (nach 3 d 4,4%, nach 17 d 21%).

**Patentansprüche** für die Vertragsstaaten BE, CH, DE, FR, GB, IT, LI, LU, NL, SE

1. Gelbildendes Gemisch aus Alkalimetallsilicat, Wasser und Geliermittel, dadurch gekennzeichnet, dass es als Geliermittel ein Trialkoxysilan der Formel R-Si(OR')₃ enthält, in der R einen aliphatischen Rest mit 1 bis 6 C-Atomen und die Reste R', die gleich oder verschieden sein können, Alkylreste mit 1 bis 4 C-Atomen bedeuten.

2. Gelbildendes Gemisch gemäss Anspruch 1, dadurch gekennzeichnet, dass das Trialkoxysilan n-Propyl- oder Isobutyltrimethoxy- oder -triethoxysilan ist.

3. Gelbildendes Gemisch gemäss einem der Ansprüche 1 oder 2, dadurch gekennzeichnet, dass es als zusätzliche Mittel zur Einstellung der Gelzeit und/oder der Gelfestigkeit Hydroxide und/oder alkalisch reagierende Salze der Alkalimetalle oder des Ammoniums enthält.

4. Gelbildendes Gemisch gemäss einem der Ansprüche 1 bis 3, dadurch gekennzeichnet, dass es zusätzlich als Mittel zur Einstellung der Gelzeit ein an sich bekanntes Geliermittel für Alkalisilikatlösungen enthält.

5. Gelbildendes Gemisch gemäss Anspruch 4, dadurch gekennzeichnet, dass es als zusätzliches bekanntes Geliermittel Ethylen- oder 1,2-Propylencarbonat enthält.

**Patentansprüche** für den Vertragsstaat: AT

1. Verfahren zur Herstellung eines gelbildenden Gemisches aus Alkalimetallsilicat, Wasser und Geliermittel, dadurch gekennzeichnet, dass einer Mischung aus Alkalimetallsilicat und Wasser als Geliermittel ein Trialkoxysilan der Formel $R-Si(OR')_3$ zugesetzt wird, in der R einen aliphatischen Rest mit 1 bis 6 C-Atomen und die Reste R', die gleich oder verschieden sein können, Alkylreste mit 1 bis 4 C-Atomen bedeuten.

2. Verfahren gemäss Anspruch 1, dadurch gekennzeichnet, dass das Trialkoxysilan n-Propyl- oder Isobutyltrimethoxy- oder -triethoxysilan ist.

3. Verfahren gemäss einem der Ansprüche 1 oder 2, dadurch gekennzeichnet, dass als zusätzliche Mittel zur Einstellung der Gelzeit und/oder der Gelfestigkeit Hydroxide und/oder alkalisch reagierende Salze der Alkalimetalle oder des Ammoniums hinzugefügt werden.

4. Verfahren gemäss einem der Ansprüche 1 bis 3, dadurch gekennzeichnet, dass zusätzlich als Mittel zur Einstellung der Gelzeit ein an sich bekanntes Geliermittel für Alkalisilicatlösungen zugesetzt wird.

5. Verfahren gemäss Anspruch 4, dadurch gekennzeichnet, dass das zusätzlich bekannte Geliermittel Ethylen- oder 1,2-Propylencarbonat ist.

**Claims** for the contracting States BE, CH, DE, FR, GB, IT, LI, LU, NL, SE

1. Gel forming mixture of alkali metal silicate, water and gelling means, characterised in that it contains as gelling means a trialkoxysilane of the formula $R-Si(OR')_3$, in which R denotes an aliphatic residue with 1 to 6 C-atoms and the residues R', which can be the same or different, denote alkyl residues with 1 to 4 C-atoms.

2. Gel forming mixture according to Claim 1, characterised in that the trialkoxy silane is n-propyl or isobutyl trimethoxy or -triethoxy silane.

3. Gel forming mixture according to Claim 1 or 2, characterised in that it contains, as additional means for adjustment of the gel time and/or the gel strength, hydroxides and/or alkaline reacting salts of alkali metals or ammonia.

4. Gel forming mixture according to one of Claims 1 to 3, characterised in that it additionally contains, as means for the adjustment of gelling time, a gelling means known as such for alkali silicate solutions.

5. Gel forming mixture according to Claim 4, characterised in that it contains ethylene or 1,2-propylene carbonate as additional known gelling means.

**Claims** for the contracting State: AT

1. Process for the production of a gel forming mixture of alkali metal silicate, water and gelling means, characterised in that a trialkoxy silane of the formula $R-Si(OR')_3$ in which R denotes an aliphatic residue with 1 to 6 C-atoms and the residues R', which can be the same or different, denote alkyl residues with 1 to 4 C-atoms, are added to a mixture of alkali metal silicate and water as gelling means.

2. Process according to Claim 1, characterised in that the trialkoxy silane is n-propyl or isobutyl trimethoxy or -triethoxy silane.

3. Process according to Claim 1 or 2, characterised in that hydroxides and/or alkaline-reacting salts of alkali metals or of ammonia are added as additional means for the adjustment of the gelling time and/or of the gel strength.

4. Process according to one of Claims 1 to 3, characterised in that a gelling means known as such for alkali silicate solution is added as means for the adjustment of the gelling time.

5. Process according to Claim 4, characterised in that the additionally known gelling means is ethylene or 1,2-propylene carbonate.

**Revendications** pour les Etats contractants BE, CH, DE, FR, GB, IT, LI, LU, NL, SE

1. Mélange gélifiant à base de silicate de métal alcalin, d'eau et d'un gélifiant, caractérisé en ce qu'il contient, en tant que gélifiant, un trialkoxysilane de formule $R-Si(OR')_3$ dans laquelle R représente un radical aliphatique ayant 1 à 6 atomes de carbone et les radicaux R', qui peuvent être identiques ou différents, représentent des radicaux alkyle ayant 1 à 4 atomes de carbone.

2. Mélange gélifiant selon la revendication 1, caractérisé en ce que le trialkoxysilane est du n-propyl-, isobutyltriméthoxy- ou -triéthoxysilane.

3. Mélange gélifiant selon l'une des revendications 1 ou 2, caractérisé en ce qu'il contient comme additifs, pour le réglage du temps de gélification et/ou de la rigidité du gel, des hydroxydes et/ou des sels de métaux alcalins ou d'ammonium à réaction alcaline.

4. Mélange gélifiant selon l'une des revendications 1 à 3, caractérisé en ce qu'il contient, en outre, comme agent pour le réglage du temps de gélification un gélifiant pour solutions de silicate alcalin connu en soi.

5. Mélange gélifiant selon la revendication 4, caractérisé en ce qu'il contient comme gélifiant additionnel connu du carbonate d'éthylène ou de 1,2-propylène.

**Revendications** pour l'Etat contractant: AT

1. Procédé de préparation d'un mélange gélifiant à base de silicate de métal alcalin, d'eau et d'un gélifiant, caractérisé en ce qu'on ajoute à un mélange de silicate de métal alcalin et d'eau, en tant que gélifiant, un trialkoxysilane de formule $R-Si(OR')_3$ dans laquelle R représente un radical aliphatique ayant 1 à 6 atomes de carbone et les radicaux R', qui peuvent être identiques ou différents, représentent des radicaux alkyle ayant 1 à 4 atomes de carbone.

2. Procédé selon la revendication 1, caractérisé en ce que le trialkoxysilane est du n-propyl-, isobutyltriméthoxy- ou -triéthoxysilane.

3. Procédé selon l'une des revendications 1 ou 2, caractérisé en ce que des hydroxydes et/ou sels de métaux alcalins ou d'ammonium à réaction alcaline sont ajoutés comme additifs pour le réglage du temps de gélification et/ou de la rigidité du gel.

4. Procédé selon l'une des revendications 1 à 3, caractérisé en ce qu'un gélifiant pour solutions de silicate alcalin connu en soi est, en outre, ajouté comme agent pour le réglage du temps de gélification.

5. Procédé selon la revendication 4, caractérisé en ce que le gélifiant additionnel connu est le carbonate d'éthylène ou de 1,2-propylène.